# EUROPEAN PATENT APPLICATION

(11) **EP 1 484 587 A2**
(43) Date of publication of application: **08.12.2004**
(21) Application number: 04253313.3
(22) Date of filing: 03.06.2004
(51) Int. Cl.: G01H 9/00

(54) **System and method for multiplexing optical sensor array signals**

(30) Priority: 04.06.2003 US 454440
(71) Applicant: Lockheed Martin Corporation, Bethesda, MD 20817 (US)
(72) Inventor: Tietjen, Byron W., Baldwinsville, NY 13027 (US)
(74) Representative: Pratt, Richard Wilson

(57) **Abstract**

An optical sensor system comprises a plurality of optical fiber sensors, each sensor operative for receiving light pulses at an input thereof and for sensing acoustic pressure and causing a change in a characteristic of the light pulses transmitted therethrough indicative of the sensed pressure. Each optical fiber sensor has a different path length corresponding to a different propagation delay time of the light pulses through that optical fiber. A coupling arrangement imparts the output time delayed pulse signals from each of the plurality of optical fibers into another optical fiber at a single input of the another optical fiber.

## Description

### Field of the Invention

The present invention relates generally to the field of fiber optic acoustic sensor arrays and more particularly to a system and method for multiplexing optical outputs from array sensors onto an optical fiber.

### Background of the Invention

Fiber optic-based acoustic sensors represent promising alternatives to conventional electronic sensors. Advantages of fiber optic sensors include high sensitivity, large dynamic range, lightweight and compact size.

Fiber optic sensors are particularly useful in undersea applications such as towed array sonar systems employing numerous pressure sensors or hydrophones positioned at predetermined locations along a cable. Here, acoustic waves propagating through a medium such as water are incident on an optical fiber which result in corresponding changes in length and index of refraction of the fiber. Such environmental changes in turn cause changes in the intensity, phase and/or polarization of a light pulse propagating through the fiber. Accordingly, an optical sensor comprising a coil of optical fiber exposed to the medium whose physical parameters are to be measured is often utilized.

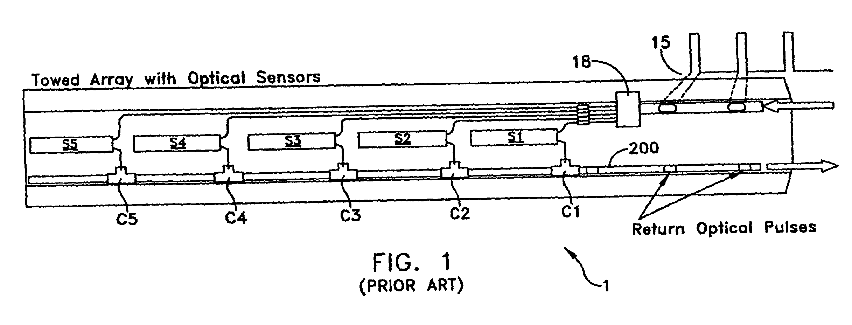

When utilizing optical sensors in an array, it is often desirable to multiplex the optical outputs from each fiber sensor onto a single optical fiber. This is true for example in towed arrays for sonar applications. The optical outputs from each of the fiber sensors in the array are multiplexed onto a single (or small number of) fibers contained within the towed cable. Multiplexing of the optical sensor outputs may be accomplished in a variety of ways, including time division multiplexing of the optical sensor signals. This technique utilizes short, periodic optical pulses as input to the optical sensors. Figure 1 provides an example of a Prior Art multiplexing arrangement 1 wherein optical pulses 15 from an input fiber 140 are each input via coupler 18 to a plurality of optical sensors S1-S5. The sensor outputs are then coupled in serial fashion via a plurality of couplers C1-C5 onto a single optical fiber 200 which runs the length of the array. The time delay of the optical pulses through each of the array sensors of different optical path lengths results in a time sequence of optical pulses, each of which represents samples of the optical sensor outputs. These can then be decoded using time sequence detectors. As shown, coupling the outputs of the optical sensors along a single fiber is accomplished using a series of optical couplers, one for each sensor, which also run along the length of the array, This, however, requires one coupler for each sensor in the array, which adds complexity to the array due to the significant number of couplers needed. Furthermore, due to its serial nature, the use of a single fiber and multiple couplers (as shown in Figure 1) tend to have a negative impact on system reliability, since, if the single fiber breaks at any point, all of the sensors beyond that point will be unavailable. Improved sensor arrays are desired.

### Summary of the Invention

According to an aspect of the invention, an optical sensor system comprises a plurality of optical fiber sensors, each sensor operative for receiving light pulses at an input thereof and for sensing acoustic pressure and causing a change in a characteristic of the light pulses transmitted therethrough indicative of the sensed pressure. Each optical fiber sensor has a different path length corresponding to a different propagation delay time of the light pulses through that optical fiber. A coupling arrangement imparts the output time delayed pulse signals from each of the plurality of optical fibers into another optical device at a single input of the another optical device.

A method for multiplexing optical signals comprises coupling in parallel an input optical pulse signal to a plurality of optical fiber sensors, each having different path lengths, for generating a series of spatially multiplexed signals output from the plurality of optical fiber sensors; and coupling each of the output signals from the optical fiber sensors at a single location to an optical device for time-multiplexing the signals onto the optical device.

A method for multiplexing optical signals comprises receiving input optical pulse signals at a plurality of parallel optical fibers each having an associated sensor at a given position and causing a change in a characteristic of the light pulses transmitted therethrough indicative of a sensed environmental condition; providing a propagation delay of said transmitted light pulses according to each fiber sensor for generating a series of parallel, spatially multiplexed signals output from said plurality of optical fibers; and imparting each of said parallel spatially multiplexed output signals from the optical fibers to a first input of an optical device for time-multiplexing said signals onto said optical device.

An apparatus for use in an acousto-optical sensor array comprises a plurality of parallel optical fibers each having an associated optical sensor disposed at a given location in the array. The fibers have an input for receiving and transmitting light pulses from a same source, with each sensor operative for causing a change in a characteristic of the light pulses transmitted therethrough indicative of a sensed environmental condition. The light pulses output from each of the optical fibers are in accordance with different propagation delays associated with each of the fibers. An optical device receives at a first input the output light pulses from each of the fibers in accordance with the different propagation delays to provide a series of time multiplexed output signals.

A method and apparatus for multiplexing optical signals that tends to eliminate the complexity of multiple couplers that would otherwise be used in an optical sensor array, and which avoids the inherent negative reliability impact associated with a serial network.

### Brief Description of the Drawings

FIGURE 1 is an exemplary diagram of a prior art towed array optical sensor system for performing standard time division multiplexing of each sensed signal from a given sensor in the array.
FIGURE 2 is an exemplary block diagram of an optical sensor system according to an embodiment of the present invention for performing parallel space-time division multiplexing.
FIGURE 3 is a detailed exemplary illustration of a coupling arrangement according to an aspect of the present invention.
FIGURE 4 is another detailed exemplary illustration of a coupling arrangement according to another aspect of the present invention.
FIGURE 5 is an exemplary flowchart illustrating a method for multiplexing optical signals according to an aspect of the present invention.
FIGURE 6 is an exemplary illustration of an overall towed array system in which is embodied the present invention.

### Description of the Invention

In accordance with an embodiment of the present invention, a system and method for multiplexing signals employs a parallel space-time multiplexing technique in which the outputs of each of a series of fiber optic sensors positioned along a cable such as a towed array, are routed in parallel up to the point where the signals are multiplexed onto a single optical device, such as another optical fiber or photodetector. The parallel outputs from each of the sensors are physically bundled together and may be brought into contact with a larger single fiber, and/or focused onto a single fiber. This spatially multiplexes the signals from each sensor onto a single optical fiber. If non-coherent optical light sources are used, large multi-mode fibers may also be employed. The arrangement of the fibers within the bundle is unimportant, as long as each fiber output can be focused or spatially multiplexed onto the single output fiber. The output signal from each optical fiber sensor can be differentiated by using short pulses of optical power. The different path lengths of the respective optical fibers provide the time delay for differentiating between the outputs of each of the sensors once their outputs are focused (spatially multiplexed) onto the single output fiber. The output pulses occur serially in time and emanate from the bundle of fibers, one fiber at a time. The output optical pulses can be decoded using various time division multiplexing decoding schemes, including for example those incorporated in the TB-29, SLR-24, and SQR-19 towed array systems.

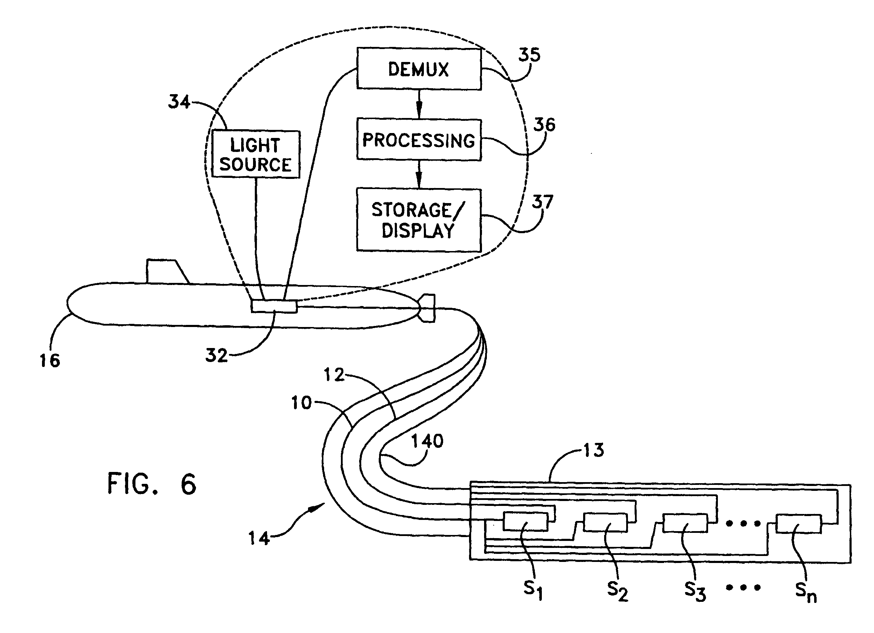

FIGURE 6 is an exemplary embodiment of a towed fiber optic array with power lines 10 and telemetry lines 12 encased in a tow cable 14 extending from a tow platform 16 such as a surface ship or submarine, to fiber optic array 13. Telemetry and power lines are coupled to fiber optic sensors S1, S2, S3, ...Sn either directly or indirectly via additional converter arrangements such as electro-optical converters, for example. Tow platform 16 contains a transmitter/receiver arrangement 32 comprising an optical source 34 for transmitting light pulses to the towed array, and a receiving unit for receiving and processing return signals from the towed array. The receiver includes a demultiplexer 35 to separate signals returning to the platform from the towed array 13. The demultiplexed signals are applied to signal processing illustrated as block 36 for producing signals representing organized sensed information, and the organized information is made available for storage and/or display, illustrated as block 37.

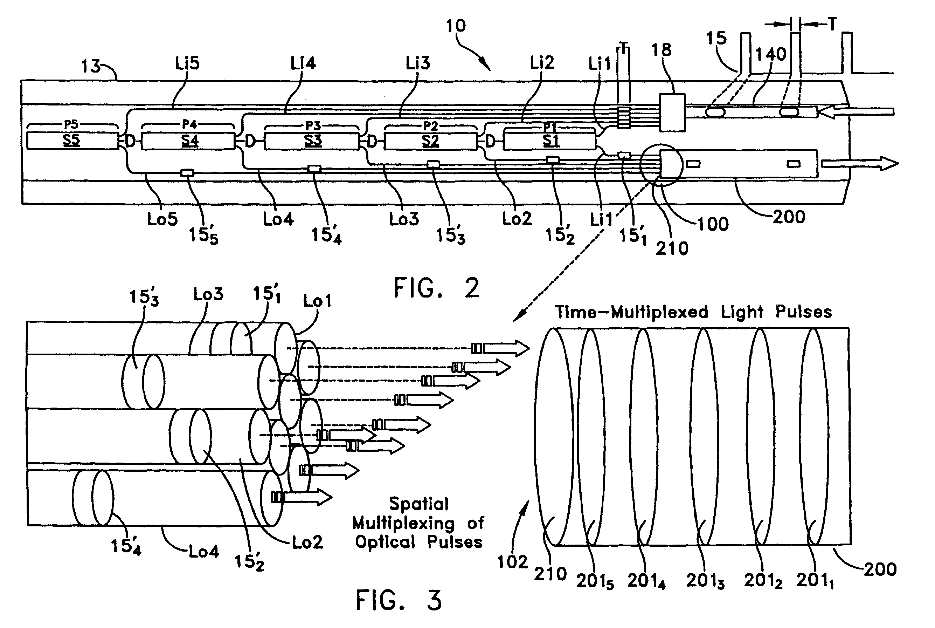

Referring now to Figure 6 in conjunction with Figure 2, an optical signal launched from light source 34 is transmitted via fiber optic input line 140 which passes along tow cable 14, to towed array 13. Sensors S1, S2, S3, S4 and S5 (see Figure 2) which may be acoustic optical sensors or hydrophones, for example, are positioned within the cable array such that their location and/or relative separation from one another is substantially fixed. The optical fiber sensors may be, for example, intensity-based optical sensors. Alternatively, non-intensity based sensors may be implemented, such as Fabry-Perot, Microbending, and/or Index-of-Refraction based optical sensors. A tension element (not shown) may, for example, extend from the platform to each of the sensor (S1-S5) locations for keeping the locations along the tension element at a substantially fixed separation, illustrated as D. Other locations may be spaced apart by D or by some other distance, as the situation may require.

Optical signal 15 carried by optical fiber 140 comprises a series of light pulses as shown in Figure 2. Splitter 18 coupled to optical fiber 140 passes the same optical signal to each of fiber optic input lines Li1, Li2, Li3, Li4, and Li5. Each of fiber optic sensors S1, S2, S3, S4 and S5 has an input coupled to a respective one of fiber optic input lines Li1, Li2, Li3, Li4, and Li5 and an output coupled to a respective one of fiber optic output lines Lo1, Lo2, Lo3, Lo4, and Lo5. Each sensor is operative for receiving the light pulses of optical signal 15 at an input thereof and for sensing acoustic pressure and causing a change in a characteristic of the light pulses transmitted therethrough indicative of the sensed pressure. In an exemplary embodiment, the characteristic change may be a change in phase of the optical signal associated with a given fiber optic sensor. Alternatively, the sensed parameter may be intensity, amplitude, frequency or other optical characteristic of the light signal.

Each optical fiber sensor has an associated different path length corresponding to a different propagation delay time of the light pulses through that optical fiber. In the exemplary embodiment shown in Figure 2, the path lengths for each of the optical fiber sensors S1-S5 comprise the aggregate of the lengths associated with each of the fiber optic input lines (Li1-Li5), lengths associated with each of fiber optic output lines (Lo1-Lo5), and any propagation delay corresponding to the propagation distance through respective sensors S1-S5.

Within cable 13, each sensor is operative for receiving light pulses 15 at an input thereof and for sensing acoustic pressure and causing a change in a characteristic of the light pulses transmitted therethrough indicative of the sensed pressure. Each optical fiber sensor has a different path length corresponding to a different propagation delay time of the light pulses through that optical fiber. A coupling arrangement 100 imparts the output time delayed pulse signals from each of the plurality of optical fibers into another optical device 200 at a single input 210 of the device. In an exemplary embodiment, the optical device may comprise another optical fiber or may alternatively be a photodetector, for example. In an illustrative embodiment the light source comprises a coherent light source such as a laser, but may alternatively comprise a non-coherent source. Additionally the optical fiber sensors may comprise intensity based sensors, and the fibers may comprise single-mode optical fibers or maybe multi-mode fibers.

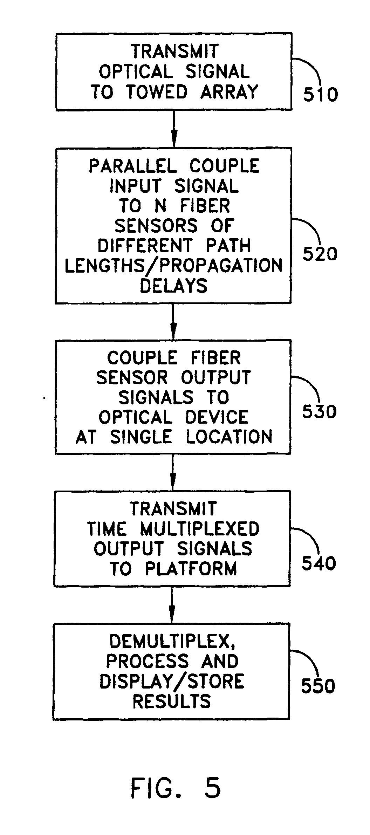

Referring now to Figure 2, in conjunction with the flow diagram of Figure 5, operation of an embodiment of the present invention is as follows. An optical signal 15 comprising a series of optical pulses is launched from an optical source and carried via optical fiber 140 to the towed array cable 13 (step 510). Splitter 18 operates to divide the input signal 15 into a plurality of parallel input optical signals 15' conveyed via a corresponding series of parallel optical pathways (Li1-Li5, Lo1-Lo5). Optical fiber sensors S1, S2, S3, S4 and S5 positioned at designated locations along the towed array have associated optical pathways (Li1-Li5, Lo1-Lo5) of different path lengths for guiding the optical signal light pulses within the towed array (step 520). As shown in Figure 2, each optical fiber sensor (e.g. S1) receives the input light pulses of optical signal 15' via a corresponding optical fiber input line (e.g. Li1) and generates an output optical signal (e.g. 15'₁) indicative of a sensed acoustic parameter. The output optical signal is carried via a corresponding optical fiber output line (e.g. Lo1) and focused onto a single optical fiber 200 at location 102. Each of the optical Shear sensors S1, S2, S3, S4 and SS have optical pathways (in aggregate, e.g. Li1 + Lo1 +P1) of different lengths corresponding to the sensor's position or location within the towed array so as to provide a plurality of time delayed and spatially multiplexed optical output signals (i.e. 15'₁, 15'₂, 15'₃, 15'₄, 15'₅) incident onto the fiber 200 (step 530) to generate a sequence of time multiplexed light pulses (i.e. 201₁, 201₂, 201₃, 201₄, 201₅). As shown in Figure 2, the path length of the optical pathway associated with optical fiber sensor S1 is the shortest, with each of sensors S2, S3, S4 and S5 having respectively increasing length optical pathways (S5 having the longest path length), and hence corresponding increasing propagation delays through the pathways. Each of the time-multiplexed light pulses (e.g. 201₁) corresponds to a respective one (e.g. 15'₁) of the spatially multiplexed optical output signals. The time-multiplexed light pulses are carried via fiber 200 to receiver unit 34 (FIG. 6) on platform 30 (step 540) where the signals are demultiplexed, processed and results stored and/or displayed (step 550). Alternatively, the demultiplexing and optionally the signal processing can be implemented within the towed array cable 13 such that the optical information is converted to electrical data and transmitted to platform 30 via, e.g. electrical lines. A photodetector positioned within the array 13, for example, may replace optical fiber 200 for receiving the optical output signals. The photodetector converts the optical signals to electrical signal information for transmission to the tow platform.

In an exemplary embodiment, the pulse length T of the pulses input to each of the plurality of optical fiber sensors S1-S5 is less than the difference in propagation time between consecutively sampled sensors. The pulse length is dependent on the difference in path lengths between consecutive sensors, which depends upon the acoustic frequency of interest. In general, the higher the frequency, the shorter the spacing between sensors, and hence the shorter the pulse length needed in order to be able to resolve the sensor output signals in time. This can be expressed as Tp = Ca/(f*Cl), where Tp is the pulse length, Ca is the speed of sound in the acoustic medium (e.g. water), f is the highest frequency of interest, and Cl is the speed of light in the optical medium (e.g. fiber), and assuming a one half wavelength (λ/2) sensor spacing. This is approximately 7500/f nanoseconds (where f is the frequency in Hz). To a lesser degree, the ratio also depends on the sampling rate and number of sensors, but tends not to be a limiting factor, except in cases of extremely large numbers of sensors (10,000 or more). It is further understood that the processing is effectively independent of the order in which the sensors are sampled, as long as the order is known. In a preferred embodiment, the sensors would be in consecutive order based on position.

Figure 3 shows a detailed representation of an arrangement for coupling each of the spatially multiplexed output signals of optical fibers Lo1-Lo5 into another optical device such as single fiber 200. In the exemplary embodiment shown, the output fibers are bundled together and arranged such that the corresponding output pulses from each fiber are incident onto the face of optical fiber 200 in a time sequential manner. Optical fiber 200 may be directly coupled at single input end 210 to the output ends of each of the N output optical fibers Lo1, Lo2, Lo3, Lo4, Lo5,..., LoN. In the exemplary embodiment shown, input end 210 of optical fiber 200 includes an input aperture of diameter sufficiently larger than the aggregate diameters of each of the N output optical fibers to enable a butt end connection of the output ends of the plurality of optical fibers to the single input end of optical fiber 200. A holder or clamp surrounding a perimeter of the bundle of output fibers and a portion of fiber 200 may be used to directly couple the output ends of each of the optical fibers to the input end of fiber 200.

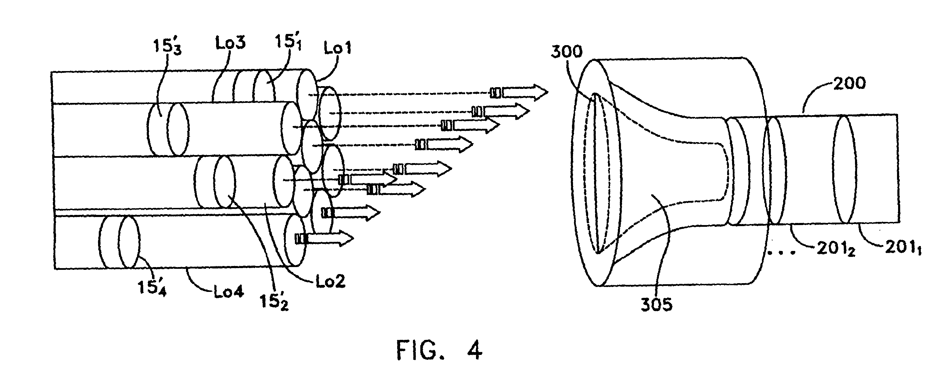

Figure 4 shows a detailed representation of an alternative arrangement for coupling each of the spatially multiplexed output signals of optical fibers Lo1-Lo5 into single fiber 200. In the exemplary embodiment shown, the output fibers are bundled together and a focusing lens 300 is arranged between the output fibers and single fiber 200 such that the output light pulses are focused onto optical fiber 200 for transmission of the return signals. A tapered optical coupler 305 or other coupling arrangement at the output ends of the optical fibers may implement focusing lens 300 for receiving the output signals and directing these signals onto another optical device, such as fiber 200 (or alternatively, a photodetector).

Although illustrated and described herein with reference to certain specific embodiments, the present invention is nevertheless not intended to be limited to the details shown. For example, while the light source has been illustrated at the location of the tow platform, it is also contemplated that such device may reside at other remote locations, including, for example, within towed array cable 13. Various other modifications may be made in the details within the scope and range of equivalents of the claims and without departing from the spirit of the invention.

## Claims

1. Apparatus for use in an acousto-optical sensor array comprising:
a plurality of optical fiber sensors, each sensor operative for receiving light pulses at an input thereof and for sensing acoustic signals and causing a change in a characteristic of the light pulses transmitted therethrough indicative of said sensed signals, each optical fiber sensor having an associated different path length corresponding to a different propagation delay time of the light pulses through that optical fiber, and
a coupling arrangement for imparting the output time delayed pulse signals from each of said plurality of optical fibers into another optical device at a single input of the another optical device.

2. The apparatus of claim 1, wherein the another optical device comprises another optical fiber.

3. The apparatus of claim 1, wherein the another optical device comprises a photodetector.

4. The apparatus of claim 1, wherein the coupling arrangement comprises a holder directly coupling output ends of each of the optical fibers to the input end of the another optical device.

5. The apparatus of claim 1, wherein the coupling arrangement comprises a focusing lens arrangement between output ends of each of the plurality of optical fibers and the input end of the another optical device.

6. The apparatus of claim 1, wherein the light pulses represent coherent light.

7. The apparatus of claim 1, wherein the light pulses represent non-coherent light.

8. The apparatus of claim 1, wherein the plurality of optical fiber sensors comprise multi-mode optical fibers.

9. The apparatus of claim 1, wherein the plurality of optical fiber sensors comprise single-mode optical fibers.

10. The apparatus of claim 1, wherein the pulse length of the pulses input to each of the plurality of optical fiber sensors is less than the difference in propagation time between consecutively sampled sensors.

11. A method for multiplexing optical signals comprising:
receiving input optical pulse signals at a plurality of parallel optical fibers each having an associated sensor at a given position and causing a change in a characteristic of the light pulses transmitted therethrough indicative of a sensed environmental condition;
providing a propagation delay of said transmitted light pulses according to each fiber sensor for generating a series of parallel, spatially multiplexed signals output from said plurality of optical fibers; and
imparting each of said parallel spatially multiplexed output signals from the optical fibers to a first input of an optical device for time-multiplexing said signals.

12. The method of claim 11, wherein the imparting comprises butt end connecting the output ends of the plurality of optical fibers to the input end of the optical device.

13. The method of claim 11, wherein the imparting comprises providing a focusing arrangement between the output ends of the plurality of optical fibers and the input end of the optical device.

14. The method of claim 11, wherein the optical device comprises another optical fiber.

15. The method of claim 11, wherein the optical device comprises a photodetector.

16. An optical sensor array system for use in a towed array sensor, comprising:
a light source for launching light pulses into an end of a first optical fiber,
a plurality of optical fiber sensors, each said optical fiber sensor operative for sensing acoustic signals and causing a change in a characteristic of the light pulses transmitted therethrough indicative of said sensed signals;
an optical coupler connected to an end of the first optical fiber for parallel coupling the light pulses into each of the plurality of optical fiber sensors, each optical fiber sensor having a different path length corresponding to a different propagation delay time of the light pulses through that optical fiber, to thereby provide a spatial multiplexing of the light pulses propagated along the plurality of optical fiber sensors; and
another optical device having a single input end for receiving the spatially multiplexed light pulses output from the plurality of optical fiber sensors and transmitting signals corresponding to the output spatially multiplexed light pulses in a time-multiplexed manner corresponding to the propagation delay associated with each fiber optic sensor.

17. The system of claim 16, wherein the another optical device comprises another optical fiber, said another optical fiber operative for transmitting light pulses in a time-multiplexed manner.

18. The system of claim 16, wherein the another optical device comprises a photodetector for converting said light pulses to electrical signals for transmission in a time-multiplexed manner.

19. The sensor array of claim 16, wherein the another optical device is directly coupled at the single input end to the output ends of each of the optical fiber sensors.

20. The sensor array of claim 16, further comprising a sequence detector for decoding the time-multiplexed signals.

21. The sensor array of claim 16, wherein the another optical device includes an input aperture of diameter sufficiently larger than the aggregate diameters of each of the plurality of optical fiber sensors to enable a direct connection of the output ends of the plurality of optical fiber sensors to the single input end of the another optical fiber,

22. The sensor array of claim 16, wherein the another optical device includes an input aperture of diameter smaller than the aggregate diameters of each of the plurality of optical fiber sensors, and a focusing lens arrangement to direct the outputs from the plurality of optical fiber sensors onto the optical device.

23. Apparatus for use in an acousto-optical sensor array comprising:
a plurality of parallel optical fibers each having an associated optical sensor disposed at a given location in said array, said fibers having an input for receiving and transmitting light pulses from a same source, each said sensor operative for causing a change in a characteristic of the light pulses transmitted therethrough indicative of a sensed environmental condition, the light pulses output from each of the optical fibers in accordance with different propagation delays associated with each of said fibers; and
an optical device receiving at a first input the output light pulses from each of the fibers in accordance with said different propagation delays to provide a series of time multiplexed output signals.

24. The apparatus of claim 23, wherein the optical device comprises another optical fiber.

25. The apparatus of claim 23, wherein the optical device comprises a photodetector.

26. The apparatus of claim 23, wherein the sensed environmental condition comprises acoustic pressure.

27. The apparatus of claim 23, wherein each of said plurality of fibers has a different optical path length corresponding to a different propagation delay associated with each of said fibers.

28. The apparatus of claim 23, further comprising a coupling arrangement disposed between the plurality of optical fibers and the first input of the optical device for imparting the time delayed output light pulses from each of said plurality of optical fibers into the first input of the optical device.

29. The apparatus of claim 28, wherein the coupling arrangement comprises a holder directly coupling output ends of each of the optical fibers to the first input of the optical device.

30. The apparatus of claim 28, wherein the coupling arrangement comprises a focusing lens arrangement between output ends of each of the plurality of optical fibers and the first input of the optical device.
